# EUROPEAN PATENT SPECIFICATION

(11) **EP 2 619 612 B1**
(45) Date of publication and mention of the grant of the patent: **01.05.2019**
(21) Application number: 11826960.4
(22) Date of filing: 04.03.2011
(51) Int. Cl.: G02F 1/13357, G02F 1/1335, G02B 3/00, G02B 5/04

(54) **OPTICAL SHEET, OPTICAL UNIT AND LIGHTING DEVICE USING THE SAME**
OPTISCHE FOLIE, OPTISCHE EINHEIT UND BELEUCHTUNGSVORRICHTUNG DAMIT
FEUILLE OPTIQUE, UNITÉ OPTIQUE ET DISPOSITIF D'ÉCLAIRAGE LES UTILISANT

(30) Priority: 10.12.2010 KR 20100126494; 20.09.2010 KR 20100092299
(43) Date of publication of application: 31.07.2013
(73) Proprietor: LG Innotek Co., Ltd., Seoul, 04637 (KR)
(72) Inventor: CHO, Su Hyeon, Seoul 100-714 (KR); LEE, Dong Hyun, Seoul 100-714 (KR)
(74) Representative: Novagraaf Technologies
(86) International application number: PCT/KR2011/001503
(87) International publication number: WO 2012/039532

(56) References cited:
- JP-A- 2004 309 801
- JP-A- 2008 000 936
- KR-A- 20060 067 271
- US-A1- 2001 030 805

## Description

### Technical Field

The present invention relates to an optical sheet for a lighting device.

### Background Art

Essential criteria for a lighting device relate to whether energy efficiency of a lighting device can be improved with low power; whether a lighting device can be implemented in a thin structure; and whether a lighting device possesses environment-friendly features.

The above criteria play an important role not only for various lighting devices used for buildings, cars, and street lights but also for lighting devices used for backlight sources in LCDs.

As for a backlight source used for a liquid crystal display, LED (Light Emitting Diode) is replacing CCFL (Cold Cathode Fluorescent Lamp). A need for realizing high brightness as well as reducing production costs is a primary impetus for people to work on complementing light transmittance or optical sheets instead of reducing the number of light sources.

Publication US 2001/030805 A1 discloses an optical sheet of particular interest.

### Disclosure of Invention

### Technical Problem

An optical sheet to meet recent trends requires high brightness and thus increases production costs. At the same time, since a plurality of optical sheets are required to satisfy specifications demanded by the recent trends, the overall reliability of a resulting device may deteriorate.

In particular, conventional optical sheets in current use cause optical loss due to total reflection during the process of receiving incoming light. The optical loss becomes severe as the number of optical sheets is increased.

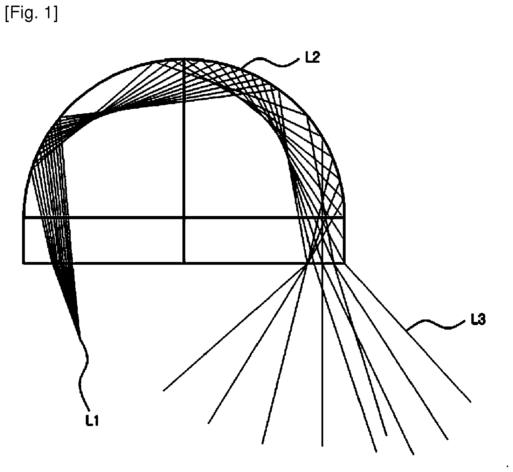

FIG. 1 illustrates total reflection observed from an optical pattern implemented in a conventional optical sheet.

Incident light L1 advances toward a lens pattern L2 formed on the surface of an optical sheet. As shown in the figure, total reflection occurs along the optical path and the reflected light comes out to the outside L3, leading to optical loss.

### Solution to Problem

The present invention has been made in an effort to realize an optical sheet which minimizes total reflection by adjusting SAG of a lens pattern formed on a base member of the optical sheet, thereby providing an optical sheet and an optical unit with which a high brightness optical device can be implemented.

To solve the technical problem, the present invention provides an optical sheet as specified in the subject-matter of claim 1.

In particular, the lens pattern can be formed in such a way that a plurality of lenses in the same size or different sizes is distributed in a uniform or in a random fashion.

The structure of the lens can assume a shape from among a circle, an ellipse, a prism, a lenticular shape, or an R-prism.

The diameter of the lens implemented in an optical sheet according to the present invention can range from 1 *µ*m to 500 *µ*m.

The lens pattern formed on the base member has a curved part with negative curvature in the space formed between neighbouring lenses.

In this case, the curved part can constitute a spherical or an aspheric surface with negative curvature, where the major axis a and the minor axis b of the surface range from 0.1 *µ*m ∼ 1000 *µ*m at the exterior angle of a neighbouring lens.

Also, an optical sheet according to the present invention can be formed in such a way that an angle constructed by at least one line connecting the respective centres of the lens patterns and a horizontal axis of LCD pixels formed in an upper part of the base member ranges from 5.5° to 9.5°.

The distance between neighbouring lens patterns can range from 5% to 15% of diameter of the lens pattern. In this case, the lens pattern according to the invention is implemented by an optical sheet comprising multiple lens patterns of the same size, the diameter of which ranges from 5 *µ*m to 25 *µ*m.

In addition, the area in which the multiple lens patterns are formed according to the present invention ranges from 70% to 95% of that of the base member.

An optical unit equipped with at least one or more optical sheets, where SAG (height: lens diameter) of multiple lens patterns formed on the base member ranges from 0.01 to 0.3 may be provided.

It is preferred for the optical unit that the lens diameter of the optical sheet disposed at the top of a structure comprising multiple optical sheets ranges from 1 um to 30 um.

In addition, the lens pattern can be formed in such a way that a plurality of lenses of the same size or different sizes is distributed in a uniform or in a random fashion. As described above, the structure of the lens can assume a shape from among a circle, an ellipse, a prism, a lenticular shape, or an R-prism.

Furthermore, the lens pattern of the individual optical sheet constituting an optical unit according to the present invention can be formed in such a way to have at least one or more optical sheets where a curved part with negative curvature is formed in the space between neighbouring lenses.

An optical sheet or an optical unit according to the present invention described above can be applied to a lighting device comprising a light transfer layer which guides incoming light from a light source to the front.

In this case, the optical sheet or the optical unit incorporating the light transfer layer can make more than half of the incident light have an incident angle ranging from 65 to 115 degrees within a lens pattern.

Still more, a lighting device according to the present invention can be made in such a way that an upper or a lower part of the optical sheet or the optical unit can comprises at least one or more reinforced films. The reinforced film exhibits at least one or more features among enhanced transparency, translucency, refraction, diffraction, diffusion, and brightness.

### Advantageous Effects of Invention

The present invention provides an optical sheet which minimizes total reflection by adjusting SAG of a lens pattern formed on a base member, thereby realizing a high-brightness lighting device.

In particular, an optical sheet or an optical unit according to the present invention not only minimizes total reflection but also realizes high brightness, thereby reducing the number of light sources and improving reliability.

### Brief Description of Drawings

The implementation of this document will be described in detail with reference to the following drawings in which like numerals refer to like elements.
FIG. 1 illustrates total reflection observed from an optical pattern implemented in a conventional optical sheet;
FIG. 2 illustrates lens patterns of a surface of an optical sheet according to the present invention;
FIG. 3 is an experimental result illustrating variation of brightness along SAG of a lens constituting an optical sheet according to the present invention;
FIG. 4 illustrates another implementation of an optical sheet according to the present invention;
FIG. 5 is a perspective drawing of one implementation of an optical sheet according to one preferred embodiment of the present invention;
FIG. 6 is a graph illustrating a moire effect by LCD pixels of various types for a regular lens pattern having a diameter of 25 *µ*m or less according to one preferred embodiment of the present invention;
FIG. 7 is a graph illustrating enhanced brightness of a regular lens pattern having a diameter of 25 *µ*m or less according to one preferred embodiment of the present invention compared with that of a conventional irregular lens pattern;
FIG. 8 is a plan view illustrating the frequency of an inclined lens pattern with respect to LCD pixels according to one preferred embodiment of the present invention;
FIG. 9 is a plan view of an optical sheet where distance between neighbouring lens patterns is maintained by a predetermined one according to one preferred embodiment of the present invention; and
FIGS. 10 and 11 illustrate examples of a lighting device to which an optical sheet according to the present invention has been applied.

### Best Mode for Carrying out the Invention

The present invention provides an optical sheet which minimizes total reflection of incident light from a light source and enhances brightness by controlling a lens pattern formed on a surface of the optical sheet used for various lighting devices.

To this end the present invention provides an optical sheet as specified in claim 1.

In what follows, a structure and an effect according to the present invention will be described in detail with reference to appended drawings. In referring to appended drawings, identical elements use the same reference number irrespective of a figure number in which the elements appear and description for the same element is omitted. The terminologies of first, second, and so on can be used to describe various elements but should not confine the elements. The terminologies are introduced only for identifying one element from the others.

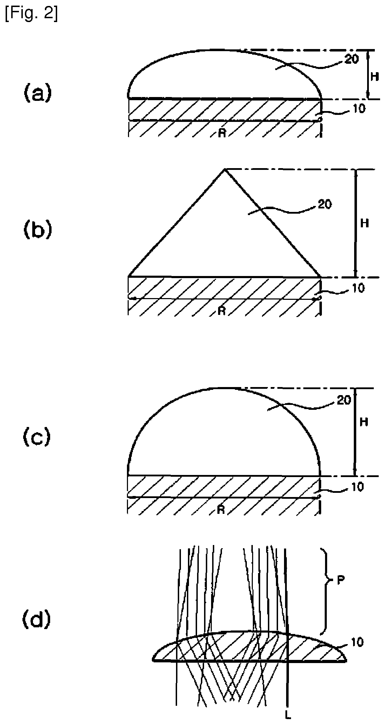

FIG. 2 illustrates lens patterns of a surface of an optical sheet according to the present invention.

(a) illustrates a cross section of an aspheric lens. (b) illustrates a cross section of a prism-shaped lens. (c) illustrates a cross section of a spherical lens. The lens shape is not limited to those listed above.

### 1. First embodiment - optical sheet or optical unit not forming part of the present invention

An optical sheet according to the present invention is equipped with a plurality of lens patterns 20 formed on a base member 10, where SAG (height H: lens diameter R) of the lens pattern ranges from 0.01 to 0.3.

A lens in this document indicates a lens, the shape of which is partially spherical, namely a spherically convex and concave lens---a concept including a three-dimensional shape such as a lenticular lens and a prism-shaped lens. In case of a convex pattern, the height denotes a normal distance from a bottom surface of a lens to the top of the lens. In case of a concave pattern, the height equals the normal distance from the aperture of a lens to the bottom part of the lens. A lens diameter R denotes a horizontal diameter of a bottom surface or an aperture of the lens.

The base member 10 can use such a material which can provide light transparency. The surface of the base member 10 is equipped with a plurality of lens patterns 20 carrying out light concentration, refraction in a tangential direction, diffusion, and so on. To this end, the lens pattern 20 can be formed either by processing the surface of the base member itself or by processing a separate lens pattern and disposing the lens pattern on the base member.

To be specific, since incoming light should penetrate the base member 10, the base member 10 can be formed by colorless and transparent synthetic resin. Although it is not particularly limited to the following, synthetic resin relevant to the base member 10 can include polyethylene terephthalate, polyethylene naphthalate, acrylic resin, polycarbonate, polystyrene, polyolefin, cellulose acetate, weather-proof polyvinyl chloride, active energy curable resin, and so on. Among others, active energy curable resin with excellent formability for a lens pattern such as ultraviolet curable resin and electron beam curable resin; or polyethylene terephthalate with excellent transparency and strength can be used. In addition, polyethylene terephthalate film, polyethylene naphthalate film, or polycarbonate film can be employed, on which a micro lens can be formed with ultraviolet curable resin.

In particular, the cross section of the lens pattern 20 formed on the top surface of the base member 10 according to the present invention can assume a shape from among a circle, an ellipse, a prism, a lenticular shape, or an R-prism, although it is not limited to those listed above. In addition, individual lenses comprising the lens pattern disposed on the top surface of the base member 10 can be formed in such a way that a plurality of lenses of the same size or different sizes is distributed in a uniform or in a random fashion. In other words, the lenses can be fabricated to be of the same size or to have a different size with each other. Furthermore, the spatial pattern of the lenses disposed on the surface of the base member can assume a polygonal grid pattern of the same shape. A polygonal grid pattern indicates that the cross sectional shape of a micro lens in a horizontal direction assumes a grid pattern such as a triangle, a rectangle, and so on. Each pattern can be composed of the same shapes or a combination of the same shapes and different shapes.

A characteristic feature of the present invention lies in minimizing total reflection of light which passes an optical sheet by manufacturing a lens in such a way that SAG (height H: lens diameter R) of the lens pattern ranges from 0.01 to 0.3. In particular, the diameter of the lens 10 described above can range from 1 *µ*m to 500 *µ*m.

In particular, an optical unit can be constructed by stacking up at least two or more optical sheets; or by disposing the optical sheets separately from each other. In order to minimize optical loss due to the conventional stacking of optical sheets, the diameter of the optical sheet disposed at the uppermost part of the optical unit is made to range from 1 *µ*m to 30 *µ*m, thereby minimizing a moire effect.

Also, FIG. 2(d) conceptualizes the image of light penetrating a lens 20 according to the present invention. It is preferred that total reflection is kept to a minimum and the light L incident on the base member 10 lies within a light path variation range of ±25 degrees with respect to a tangential direction of the incoming light direction; namely, it is preferred that the incident light lies in an angular range of 65 to 115 degrees. More preferably, more than half of the light incident on an optical sheet according to the present invention should have an incident angle ranging from 65 to 115 degrees within a lens pattern.

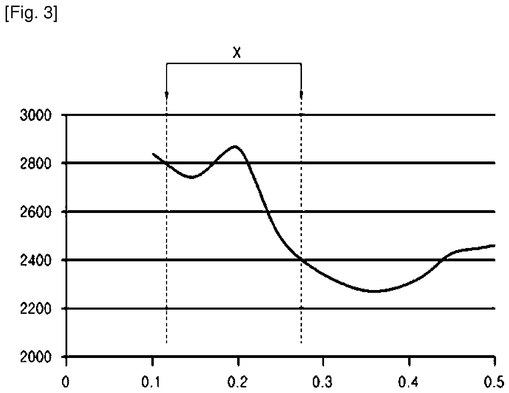

FIG. 3 is an experimental result illustrating variation of brightness along SAG of a lens constituting an optical sheet according to the present invention.

With reference to the figure, if light penetrates an optical sheet or an optical unit according to the present invention, total reflection is kept to a minimum and the SEG interval (X) providing high brightness ranges from 0.01 to 0.3. In other words, through the arrangement of a lens pattern formed on the base member, total reflection is minimized and high brightness can be realized.

### Mode for the Invention

### 2. Second embodiment, also not forming part of the present invention

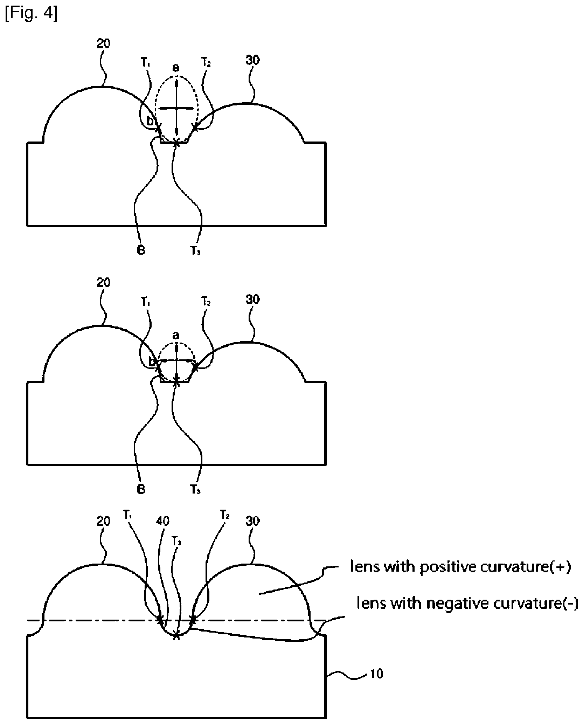

FIG. 4 illustrates another implementation of an optical sheet according to the present invention.

As shown in the figure, implementing a plurality of lens patterns 20, 30 on the base member 10 is carried out in the same way as the embodiment described in FIG. 2; the current embodiment differs in that a curved part with a concave pattern is formed between neighbouring lenses. At this time, the distance between lenses denotes a shortest distance between a pair of lenses parallel to each other in the arrangement of various convex patterns.

If the lens patterns 20, 30 formed on the base member 10 are taken into consideration, as shown in FIG. 4(a) and (b), the bottom surface between the lenses has a flat structure without irregularity. If an optical sheet with the aforementioned structure is applied to a device such as LCD, outgoing light penetrates the bottom surface along a relatively straight path, thus appearing in a random fashion. In order to complement the uniformity of the outgoing light, optical sheets are used. Conventionally, two or more optical sheets have been employed to secure optical uniformity; an optical sheet according to the present invention secures brightness by adjusting SAG of employed lenses and at the same time, by using only one optical sheet equipped with a curved part of negative curvature in the space between the respective lenses, provides the same light uniformity as can be secured by a plurality of conventional optical sheets.

To be specific, if the space between neighbouring lenses 20, 30 is so formed that a virtual ellipse with a major axis in a vertical direction 'a' and a minor axis in a horizontal direction 'b' inscribes the space, the virtual ellipse meets the space at a lens first tangent point T1, a lens second tangent point T2, and a bottom part tangent point T3. Next, by filling the space except for the lens 20, the virtual ellipse, and the bottom part, a curved part 40 with negative curvature which passes the lens first tangent point, the lens second tangent point, and the bottom part tangent point can be formed.

By adjusting the lengths of the major axis 'a' and the minor axis 'b' of the virtual ellipse, a spherical shape can be obtained. The lengths of the major and the minor axis should be adjusted within a range of 0.1 *µ*m ∼ 1000 *µ*m. If the length leaves the range above, brightness required for a lens cannot be achieved and Haze according thereto cannot be met.

FIG. 4(c) illustrates a cross sectional view of a concave part of an optical sheet according to the present invention; an ellipse forms a virtual sphere by adjusting a major axis 'a' and a minor axis 'b' thereof; and a curved part 40 with negative curvature which passes the lens first tangent point, the lens second tangent point, and the bottom part tangent point is formed. The negative curvature formed between neighbouring lenses provides an effect of diffusing light on the contrary to a lens with positive curvature collecting light. Therefore, distribution of light diffusion and improvement of light uniformity can be obtained, providing the same function carried out by a plurality of conventional films with a single optical sheet.

The curved part with negative curvature has been introduced only to illustrate the embodiment; a concave pattern can also be obtained from a method of applying pressure to the space between neighbouring lenses by using a mask with a protruding pattern.

### 3. Third embodiment

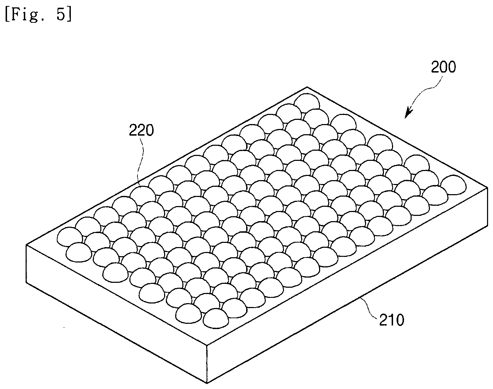

FIG. 5 is a perspective drawing of one implementation of an optical sheet according to one preferred embodiment of the present invention.

As described in the embodiment above, the third embodiment can also be implemented to minimize a moire effect by arranging a lens pattern for the SAG (height H: lens diameter R) of the lens pattern to range from 0.01 to 0.3.

An optical sheet 200 of the present embodiment comprises a base member 210 and a plurality of lens patterns 220 of the same size formed regularly on the base member.

When a lens pattern is arranged in a regular fashion, a moire effect occurs due to LCD pixels (not shown) formed in an upper part of an optical sheet and periodicity of the regular pattern shape. The moire effect refers to a visual experience where repetition of bright and dark patterns generated by light diffused through an optical sheet appears in the form of waves due to destructive and constructive interference determined by periodicity of a pattern formed regularly on the optical sheet and LCD pixel size.

A regular pattern shape according to the present invention removes the moire effect in three different ways.

As described in the first embodiment, it is preferred that the diameter of a lens pattern is determined within a range of 1∼500 *µ*m while the SAG remains in the range of 0.01 ∼ 0.3 according to the present invention. More specifically, the moire pattern can be avoided with a dramatic effect by preparing the following specifications.

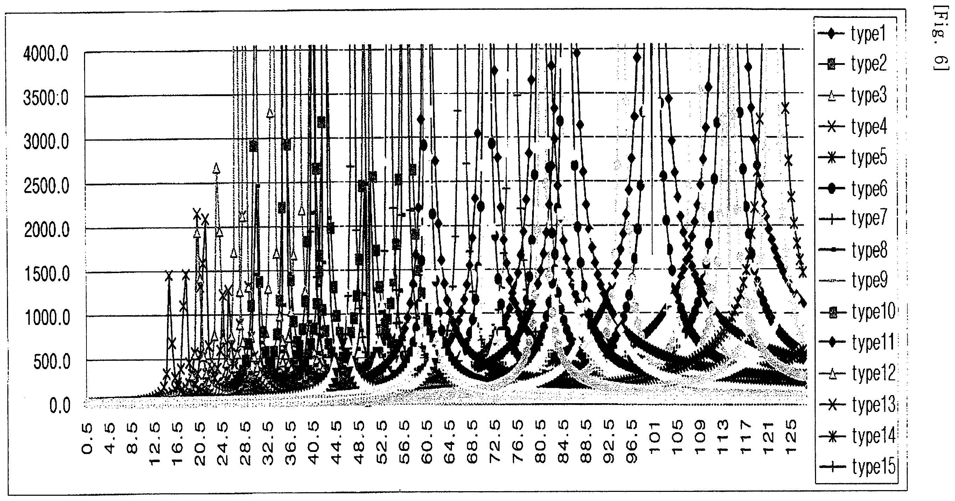

A first method for removing a moire effect, and forming part of the present invention, is to adjust the size of a lens pattern 220 shown in FIG. 2. To be more specific, the diameter of the lens pattern 220 is made to range from 5 *µ*m to 25 *µ*m. FIG. 6 shows a moire effect improved by adjusting the size of the lens pattern 220.

FIG. 6 is a graph illustrating a moire effect by LCD pixels of various types for a regular lens pattern having a diameter of 25 *µ*m or less according to one preferred embodiment of the present invention. The vertical axis represents light intensity and the horizontal axis represents the diameter of a lens pattern, increasing to the right direction.

With reference to FIG. 6, if the diameter of a lens pattern is made to be 25 *µ*m or less, the maximum variation range of light intensity can be 1500 or less. It indicates that a moire effect is considerably removed compared to the cases of lens patterns of a diameter other than 25 *µ*m or less.

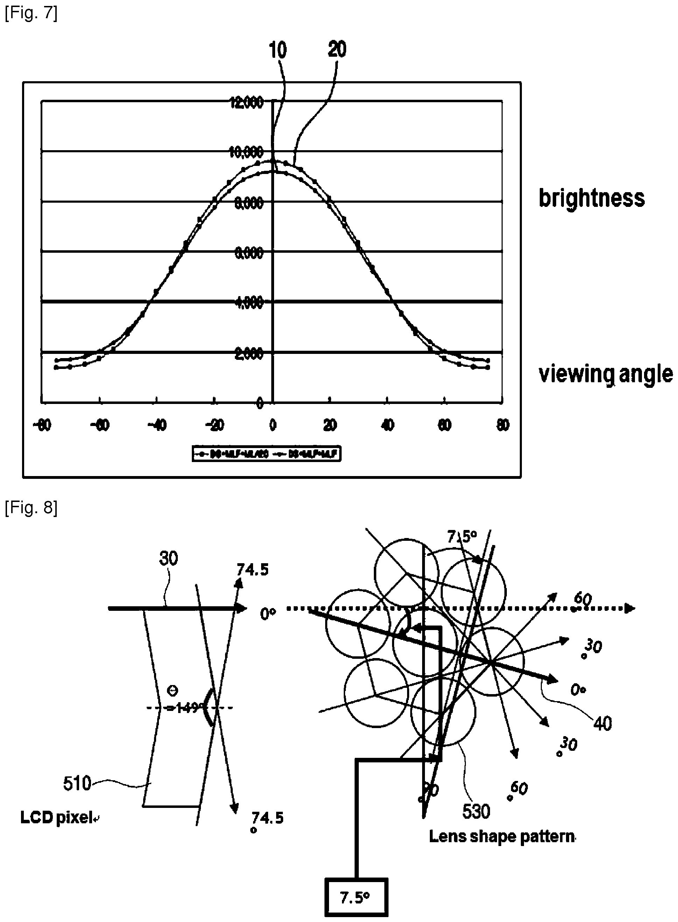

FIG. 7 is a graph illustrating enhanced brightness of a regular lens pattern having a diameter of 25 *µ*m or less according to one preferred embodiment of the present invention compared with that of a conventional irregular lens pattern.

Line 20 represents brightness of a regular lens pattern with a diameter of 25 *µ*m or less while line 10 represents brightness of a conventional, irregular lens pattern. The horizontal axis represents a viewing angle. With reference to FIG. 7, if the viewing angle is zero, in other words, if the LCD plane is viewed from above, brightness is improved by about 5 % compared with that provided by an optical sheet of a conventional, regular pattern.

A second method for removing a moire effect, however not forming part of the present invention, is to arrange the lens pattern to have lens frequency different from the spatial frequency of LCD pixels.

FIG. 8 is a plan view illustrating the frequency of an inclined lens pattern with respect to LCD pixels according to one preferred embodiment of the present invention.

In the present invention, LCD pixels 510 of in-plane switching (IPS) type are illustrated but are not limited thereto. It is preferred that the internal angle θ of the LCD pixel 510 of IPS type is 149°. In this case, by inclining at least one line (40; hereinafter, it is called a reference line) among those lines connecting the respective centres of the lens patterns 530 by 7.5°±2° with respect to the horizontal axis 30 of the LCD pixel 510 (namely, 5.5° or more and 9.5° or less), the moire pattern can be removed.

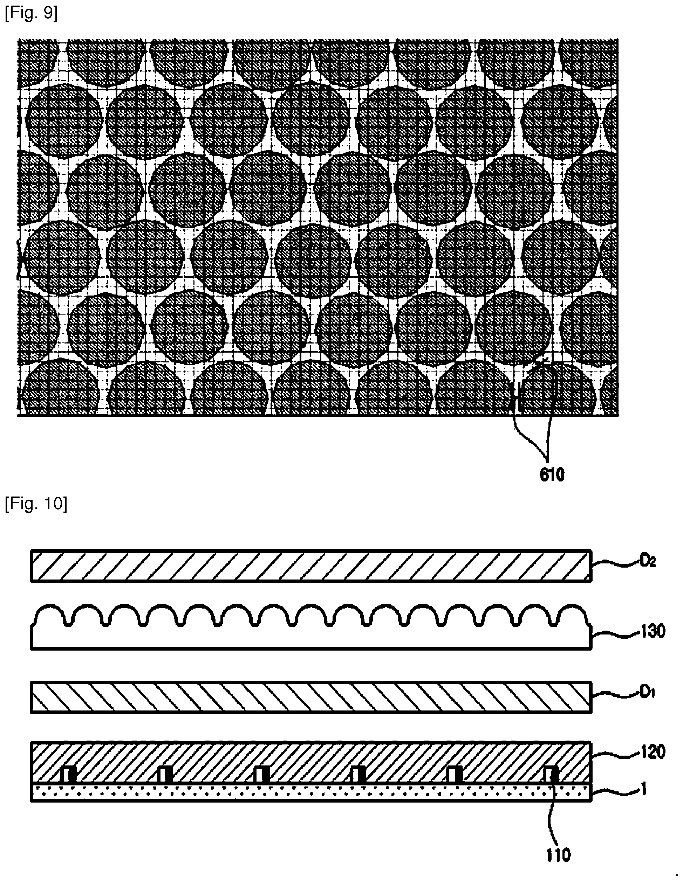

As shown in FIG. 9, the reference line 40 connecting the respective centres of the lens patterns in a horizontal direction becomes parallel to the horizontal axis of the body part of the optical sheet unless the pattern of a lens shape arranged regularly is inclined. The horizontal axis of the body part is usually parallel to the horizontal axis of LCD pixels formed in an upper part of the optical sheet. Therefore, if the horizontal line of the lens pattern is arranged to be inclined with respect to the horizontal axis of the body part, the horizontal line of the lens pattern eventually makes an inclination angle with the horizontal axis of LCD pixels parallel to the horizontal axis of the body part.

To increase the packing factor of the lens pattern 530, as shown in FIG. 5, it is most preferred that a line connecting the centres of the respective lenses surrounding a lens forms a regular hexagon. In a regular hexagon structure, the angle formed regularly from the lens pattern 530 makes 0°, 30°, 60°, and 90° with respect to the reference line 40 of the lens pattern.

A third method for removing a moire pattern, however also not forming part of the present invention, is to maintain the separation between lens patterns at a predetermined distance.

FIG. 9 is a plan view of an optical sheet where distance between neighbouring lens patterns is maintained by a predetermined one according to one preferred embodiment of the present invention.

With reference to FIG. 9, it is preferred that the separation distance 610 between neighbouring lens patterns ranges from 5% to 15% of the diameter of the lens pattern. In this case, periodicity of a lens pattern which is the most important factor of the moire effect can be changed.

In addition, common to the three aforementioned methods for removing a moire pattern, by adjusting the packing factor and SAG of a lens pattern, controlling brightness and diffusion is made possible, which is not allowed for an optical sheet of conventional irregular patterns.

For example, by making the packing factor range from 70% to 95% for the respective methods, in other words, by making the area in which a lens pattern is formed range 70% to 95% of the area of the body part, brightness can be enhanced. Also, by keeping the SAG of a lens to range from 0.3 to 0.6, more preferably from 0.01 to 0.3 corresponding to the SAG range of a lens pattern of the present invention, brightness can be improved; by adjusting the packing factor and the SAG at the same time, the brightness can also be improved.

### 4. Fourth embodiment, also not forming part of the present invention

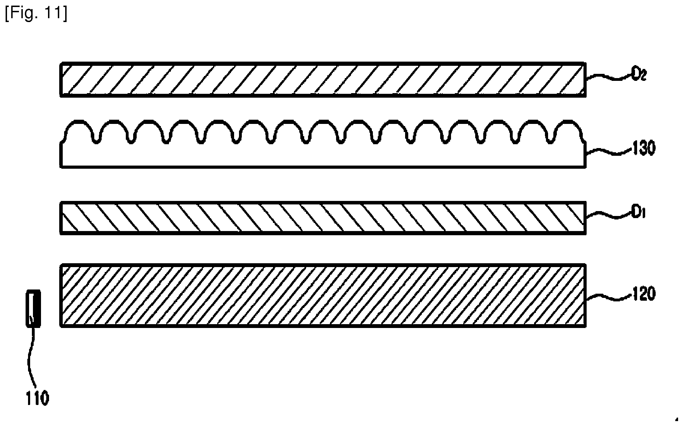

FIGS. 10 and 11 illustrate examples of a lighting device to which an optical sheet according to the present invention has been applied.

An optical sheet or an optical unit disposing two or more optical sheets according to the present invention can be used for various types of lighting devices. For example, the optical sheet or the optical unit of the present invention can be applied to lighting devices used in a car, a building, and public places; and backlight units used for liquid crystal display devices.

As shown in the figure, a lighting device can be equipped with a light transfer layer 120 which guides the light incoming from a light source 110 to the front. The lighting device can comprise an optical sheet 130 which is disposed in an upper part of the light transfer layer and can assume a structure of various types according to the present invention; and an optical unit which is a structure comprising a plurality of optical sheets.

To be specific, the light source 110 comprises an LED, a fluorescent lamp, an incandescent lamp, an electroluminescent light, and other similar light sources. The light source 110 can further comprise an arbitrary solid state lighting source not limited to the above.

In other words, the lighting device can comprise a light transfer layer 120 transferring light incoming from a light source 110 in a particular direction; and an optical sheet or an optical unit according to the present invention receiving the light incoming from the light transfer layer through reflection, refraction, diffusion, and diffraction and transferring the received light to the front. The lighting device can further comprise one or more reinforced films in an upper or a lower part of the optical sheet or the optical unit; and by doing so, possess at least one feature from among enhanced transparency, translucency, refraction, diffraction, diffusion, and brightness.

Put differently, if it is assumed that the structure shown in FIGS. 5 and 6 is a backlight unit, FIG. 5 provides light through a plurality of LED light sources 110 disposed on a printed circuit board; the light transfer layer 120 corresponds to a structure realizing a function of a light guide plate; the light which has passed the light transfer layer 120 can provide an effect of improving brightness by minimizing total reflection in the optical sheet 130 according to the present invention. Reinforced films D1, D2 such as prism sheets and brightness reinforced films DBEF, BEF, ESR can also be included in the structure of the backlight unit.

If a lighting device comprising a light source, a light transfer layer, and an optical sheet according to the present invention are taken into account besides the structure shown in FIGS. 10 and 11, the light transfer layer can be transparent or translucent; partially reflective, refractive, or emissive; or can be formed by a light transfer adhesive transferring part of light incoming from a light source through a structure comprising a stack of a few layers or a material layer comprising glass, or epoxy.

In other words, the lighting device has a wide application, including dome lighting devices on the ceiling in a building, glove box lighting devices, floor lighting devices, map lighting devices, mirror lighting devices, decoration lighting devices, brake lighting devices in a rear window, and lighting devices in a car.

Specific embodiments have been described in the detailed description of the present invention. However, various modifications are also possible if the modifications belong to the scope of the present invention as claimed.

## Claims

1. An optical sheet comprising a plurality of lens patterns formed on a base member, wherein a ratio between a height (H) and a lens diameter (R) of the lens pattern ranges from 0.01 to 0.3, **characterized in that** the optical sheet comprises multiple lens patterns of the same size, the diameter of which ranges from 5 µm to 25 µm, and wherein each of the plurality of lens patterns has a curved part with negative curvature in the space formed between neighbouring lenses.

2. A lighting device comprising:
a light source;
a light transfer layer transferring light incoming from the light source in a particular direction;
an optical sheet according to claim 1, the optical sheet being disposed on the light transfer layer; and
LCD pixels disposed on the optical sheet,
wherein the density of the lenses is 50% or more of the entire optical sheet area,
wherein the area in which the plurality of lens patterns are formed ranges from 70% to 95% of that of the base member,
wherein more than half of the light incident on the optical sheet has an incident angle ranging from 65 to 115 degrees within the lenses.

3. The lighting device of claim 2, wherein the structure of each lens assumes a shape from among a circle, an ellipse, a prism, a lenticular shape, or an R-prism.

## Patentansprüche

1. Optische Folie, die eine Vielzahl von Linsenmustern umfasst, welche auf einem Grundelement gebildet sind, wobei ein Verhältnis zwischen einer Höhe (H) und einem Linsendurchmesser (R) des Linsenmusters im Bereich von 0,01 bis 0,3 liegt, **dadurch gekennzeichnet, dass** die optische Folie mehrere Linsenmuster derselben Größe umfasst, deren Durchmesser im Bereich von 5 µm bis 25 µm liegt, und wobei jedes aus der Vielzahl von Linsenmustern einen gekrümmten Teil mit negativer Krümmung im Raum umfasst, der zwischen benachbarten Linsen gebildet ist.

2. Beleuchtungsvorrichtung, umfassend:
eine Lichtquelle;
eine Lichtübertragungsschicht, die Licht, welches aus der Lichtquelle eintrifft, in eine bestimmte Richtung überträgt;
eine optische Folie nach Anspruch 1, wobei die optische Folie auf der Lichtübertragungsschicht angeordnet ist; und
LCD-Pixel, die auf der optischen Folie angeordnet sind,
wobei die Dichte der Linsen 50 % oder mehr der Gesamtfläche der optischen Folie beträgt,
wobei die Fläche, in der die Vielzahl von Linsenmustern gebildet sind, im Bereich von 70 % bis 95 % derjenigen des Grundelements liegt,
wobei mehr als die Hälfte des Lichts, das auf die optische Folie fällt, einen Einfallwinkel im Bereich von 65 bis 115 Grad innerhalb der Linsen aufweist.

3. Beleuchtungsvorrichtung nach Anspruch 2, wobei die Struktur jeder Linse eine Form aus einem Kreis, einer Ellipse, einem Prisma, einer Linsenform oder einem R-Prisma annimmt.

## Revendications

1. Feuille optique comprenant une pluralité de motifs de lentille formés sur un élément de base, dans laquelle un rapport entre une hauteur (H) et un diamètre de lentille (R) du motif de lentille se situe dans la plage de 0,01 à 0,3, **caractérisée en ce que** la feuille optique comprend de multiples motifs de lentille de la même taille, dont le diamètre se situe dans la plage de 5 µm à 25 µm, et dans laquelle chacun de la pluralité de motifs de lentille a une partie incurvée avec une courbure négative dans l'espace formé entre des lentilles voisines.

2. Dispositif d'éclairage comprenant :
une source de lumière ;
une couche de transfert de lumière transférant de la lumière provenant de la source de lumière dans une direction particulière ;
une feuille optique selon la revendication 1, la feuille optique étant disposée sur la couche de transfert de lumière ; et
des pixels d'affichage à cristaux liquides disposés sur la feuille optique,
dans lequel la densité des lentilles est de 50 % ou plus de la surface entière de la feuille optique,
dans lequel la surface sur laquelle la pluralité de motifs de lentille sont formés se situe dans la plage de 70 % à 95 % de celle de l'élément de base,
dans lequel plus de la moitié de la lumière incidente sur la feuille optique a un angle d'incidence se situant dans la plage de 65 à 115 degrés à l'intérieur des lentilles.

3. Dispositif d'éclairage selon la revendication 2, dans lequel la structure de chaque lentille présente une forme parmi un cercle, une ellipse, un prisme, une forme lenticulaire ou un prisme R.
